Europäisches Patentamt

European Patent Office

Office européen des brevets

(19)

(11) Veröffentlichungsnummer: **0 241 776**
**B1**

(12) # EUROPÄISCHE PATENTSCHRIFT

(45) Veröffentlichungstag der Patentschrift:
**12.12.90**

(51) Int. Cl.⁵: **B29C 61/06, B29C 61/10**

(21) Anmeldenummer: **87104448.3**

(22) Anmeldetag: **25.03.87**

(54) **Verfahren zur Herstellung eines Kunststoffteils mit Formgedächtnis und Vorrichtung zur Durchführung dieses Verfahrens, sowie Kunststoffteile die nach diesem Verfahren hergestellt sind.**

(30) Priorität: **14.04.86 DE 3612518**

(43) Veröffentlichungstag der Anmeldung:
**21.10.87 Patentblatt 87/43**

(45) Bekanntmachung des Hinweises auf die Patenterteilung:
**12.12.90 Patentblatt 90/50**

(84) Benannte Vertragsstaaten:
**AT BE CH DE FR GB IT LI NL SE**

(56) Entgegenhaltungen:
**EP-A- 0 078 465**
**DE-A- 1 914 455**
**DE-A- 2 856 580**
**DE-C- 911 541**
**FR-A- 2 009 087**
**FR-A- 2 041 270**
**FR-A- 2 297 342**
**FR-A- 2 339 239**
**GB-A- 1 155 470**
**US-A- 2 885 105**
**US-A- 2 994 933**
**US-A- 3 526 683**
**US-A- 3 662 094**
**US-A- 3 988 399**

(73) Patentinhaber: **RXS Schrumpftechnik-Garnituren GmbH, Profilstrasse 4, D-5800 Hagen 1(DE)**

(72) Erfinder: **Käufer, Helmut, Prof. Dr., Florastrasse 64, D-4020 Mettmann 2(DE)**
Erfinder: **Kipfelsberger, Christian, Dipl.-Ing., Hauptstrasse 1, D-8071 Hepberg(DE)**
Erfinder: **Leyrer, Karl-Heinz, Dipl.-Ing., Hauptstrasse 24, D-7085 Bobfingen(DE)**

(74) Vertreter: **Fuchs, Franz-Josef, Dr.-Ing. et al, Postfach 22 13 17, D-8000 München 22(DE)**

## Beschreibung

Die Erfindung betrifft ein Verfahren zur Herstellung eines Kunststoffteils, dem ein Formgedächtnis eingeprägt wird und das durch Energiezufuhr zurückgestellt wird. Weiterhin wird eine Vorrichtung zur Durchführung des Verfahrens und Kunststoffteile, die nach dem Verfahren in der Vorrichtung hergestellt werden, aufgezeigt.

Aus der deutschen Patentschrift 1 525 815 ist ein länglicher, gegebenenfalls verzweigter rohr- oder schlauchförmiger Hüllmantel aus thermoplastischem Kunststoff bekannt, wobei diesem Hüllmantel ein Formgedächtnis verliehen ist. Bei Energiezufuhr wird der Hüllmantel zurückgestellt, bis er - wenn möglich - seine Ursprungsform erreicht hat. Dieser Hüllmantel wird nach einem der bekannten Verfahren, zum Beispiel durch Extrusion, in einer Grundform hergestellt. Anschließend wird er einem Vernetzungsverfahren, zum Beispiel durch energiereiche Bestrahlung, unterzogen und dann zur Verleihung des Formgedächtnisses zwangsweise in eine zweite Form, zum Beispiel durch Weitung, gebracht. In diesem Zustand wird die Form "eingefroren". Bei Bedarf wird dann durch Energiezufuhr, zum Beispiel durch Wärme, das Formgedächtnis aktiviert, so daß das Formteil bestrebt ist, seine ursprüngliche Form soweit als möglich wieder zu erlangen. Bei solchen Formteilen ist nun mitunter zumindest in bestimmten Bereichen eine besonders hohe Festigkeit erwünscht, die jedoch diesem Formteil aufgrund seiner instabilen Form nicht gegeben ist. Aus diesem Grunde ist versucht worden, diesen Bereichen durch zusätzliche formstabile Verstärkungen die erforderliche Festigkeit zu verleihen, wie es zum Beispiel aus der deutschen Offenlegungsschrift 1 925 739 bekannt ist. Dort sind bei einer schrumpfbaren, längsgeteilten Umhüllung entlang eines Längsschlitzes, in der Wandung nicht verformbare Verstärkungen eingelagert, die den Endbereichen dieser Umhüllung in den längsseitigen Verschlußbereichen die nötige Festigkeit und Formstabilität verleihen. Bei derartigen Formteilen sind jedoch verschiedene, zum Teil aufwendige Verfahrensschritte, zum Beispiel die Elektronenbestrahlung des Formteils, nötig, wobei zusätzliche Maßnahmen zur Erlangung der gewünschten Eigenschaften erforderlich sind. Außerdem ergeben sich in den kritischen Bereichen, wie zum Beispiel in den Verschlußbereichen einer Umhüllung, bezüglich der Formstabilität des Verschlusses erhöhte Probleme, da durch die Erwärmung eine unbestimmte Verformung der Verschlußelemente nicht auszuschließen ist.

Weiterhin ist aus der deutschen Offenlegungsschrift 2 856 580 ein Herstellungsverfahren von technischen Teilen mit belastungsgerechteren Strukturen aus thermoplastischen polymeren Werkstoffen bekannt. Formteile aus thermoplastischen Werkstoffen können mit Hilfe dieses dort beschriebenen Verfahrens, dem "Druckverstrecken", mit höheren Festigkeiten versehen werden als dies bisher beim Spritzgießen, Extrudieren, Gießen oder anderen Herstellverfahren erreicht werden konnte. Bei diesen Verfahren handelt es sich um einen Vorgang, bei dem bewußt unisotrope Strukturen innerhalb des Formteils hergestellt werden, die für den späteren Belastungsfall günstig sind. Hierbei sind jedoch für die Wärmeformbeständigkeit solcher verstreckter Teile entsprechende Fixierprozesse nötig, durch die garantiert wird, daß die zwangsweise für den entsprechenden Anwendungsfall eingebrachten Molekülorientierungen im betreffenden Temperaturbereich erhalten bleiben. Damit ist auch die Formbeständigkeit in diesem Temperaturbereich gewährleistet. Bei diesem Spritzgieß-Preß-Reck-Verfahren (im folgenden nur als SPR-Verfahren bezeichnet) werden in einen Vorformling bei Abkühlung unter Druck Molekülorientierungen eingebracht, die bei einer bestimmten Fixiertemperatur unter Druck fixiert werden. Dies hat zur Folge, daß dieser Zustand nach der Fixierzeit die ihm eingebrachten Eigenschaften, zum Beispiel höhere Festigkeit in bestimmten Bereichen, aufweist. Wird dieser Gegenstand jedoch wiederum annähernd auf bzw. über die Fixiertemperatur erwärmt, werden die Molekülorientierungen rückgängig gemacht und der Gegenstand verliert seine zwangsweise mit dem SPR-Verfahren eingebrachten Eigenschaften. So ergibt sich daraus, daß derartige Formteile mit diesen neuen Eigenschaften nur unterhalb der Fixiertemperatur verwendungsfähig sind. Dieses Verfahren wurde also bei Kunststoffteilen dann angewendet, wenn Werkstoffeigenschaften bezüglich der Festigkeit, der Härte, des Reibverhaltens oder auch der Chemikalienbeständigkeit verbessert werden sollten. Bei all diesen Verbesserungen muß jedoch der hierfür geltende Temperaturbereich bzw. die maximale Temperatur beachtet werden, da sonst, wie bereits erwähnt, die Eigenschaften verloren gehen.

Aus der US-PS 2994933 ist ein zylindrisches Bauteil bekannt, das in kaltem Zustand ausgewalzt und in weiteren Verfahren zu einem hantelförmigen Gegenstand bearbeitet wird. Bei Einfluß von Wärme erfolgt eine Rückformung in radialer Richtung. Mit einem solchen Verfahren lassen sich jedoch nur hohlzylindrische Gegenstände aber keine massiven, nicht hohlzylindrischen Gegenstände mit einem Formgedächtnis herstellen.

In der US-PS 3662094 werden ebenfalls nur dünnwandige hohlzylindrische Körper mit Formgedächtnis und Verfahren zur Herstellung beschrieben. Auch hier ist es nicht möglich, die genannten Verfahren auf massive Körper anzuwenden.

Aus der französischen Patentschrift ist bekannt, ein Verpackungsgefäß aus einer Folie herzustellen, wobei die Folie erwärmt und dann verformt wird. Hier wird eine dünne Folie verformt, wobei diese Verformung bei erhöhter Temperatur erfolgt.

Verfahren und eine Vorrichtung zum Überziehen der Griffschenkel von Zangen oder dergleichen werden in der deutschen Patentschrift 911 541 beschrieben. Dabei handelt es sich wiederum um die Verformung einer Folie oberhalb ihres Erweichungspunktes, wenn auch unterhalb der Fließgrenze, d.h. es ist auch bei Herstellung des später schrumpffähigen Körpers eine Wärmebehandlung nötig.

In der französischen Patentschrift 2297342 werden Verschlußelemente für eine Muffe beschrieben, die durch Wärmebehandlung verformbar sind. Hier muß jedoch das hierfür verwendete Kunststoffmaterial auf jeden Fall vernetzt werden. Dies bedeutet, daß bei der Herstellung erhebliche Mehrkosten aufzuwenden sind. Bei elektronischer Vernetzung kommt erschwerend hinzu, daß weitere Bearbeitungsschritte nötig sind. Außerdem ist die Anwendung des Verfahrens bei der Herstellung von massiven bzw. dickwandigen Gegenständen schwierig, da bei solchen Gegenständen das nach innen abnehmende Vernetzungsgefälle stark in Erscheinung tritt.

Weiterhin sind kaum partielle Verformungsbereiche zu erreichen, da weder bei chemischer noch bei elektronischer Vernetzung eine dafür erforderliche Abgrenzung erfolgen kann.

Für vorliegende Erfindung liegt nun die Aufgabe zugrunde, ein relativ einfaches Verfahren zu entwickeln, mit dem einem Kunststoffteil ein Schrumpfverhalten auferlegt werden kann, das vorher festgelegt ist, wobei die Werkstoffeigenschaften in den kritischen Rückstellbereichen zu verbessern sind.

Weiterhin liegt eine zweite Aufgabe der Erfindung zugrunde, eine Vorrichtung zur Durchführung des Verfahrens zu schaffen.

Schließlich liegt der Erfindung in diesem Zusammenhang die dritte Aufgabe zugrunde, nach dem Verfahren hergestellte Kunststoffteile zu schaffen, die gezieltes Schrumpfverhalten zeigen, wobei in den kritischen Bereichen gegenüber bisherigen Schrumpfartikeln verbesserte Festigkeitseigenschaften auszubilden sind.

Die erste Aufgabe wird nun mit Hilfe des eingangs näher erläuterten Verfahrens dadurch gelöst, daß in das Kunststoffteil durch ein Spritzgieß-Preß-Reck- bzw. Preß-Reck-Verfahren Molekülorientierungen durch Scher- und Dehnströmungen eingebracht werden, daß diese Molekülorientierungen durch eine Abkühlung unter Druck auf eine Fixiertemperatur fixiert werden und daß dann das Kunststoffteil durch Erwärmung einer gezielten Schrumpfung bzw. Rückverformung durch Aufhebung der Molekülorientierungen unterworfen wird.

Die der Erfindung zugrunde liegende zweite Aufgabe der Erfindung wird dadurch gelöst, daß die Vorrichtung eine Spritzguß-, Extrudier-, Preß- oder Gießeinrichtung aufweist mit einem ersten Formnest zur Herstellung eines Vorformlings, daß weiterhin in dieser Vorrichtung eine Verschiebeeinrichtung zum Versetzen des Vorformlings in ein zweites Formnest angeordnet ist, wobei dieses zweite Formnest aus mindestens zwei Druckplatten besteht, die die zum gezielten Umverformen des schrumpfbaren Teils benötigten Konturen und Ausformungen aufweisen, daß weiterhin eine Druckvorrichtung zum Druckverstrecken des Vorformlings in diesem zweiten Formnest angeordnet ist und daß die Vorrichtung Temperaturregelungen und Heizungsvorrichtungen aufweist.

Schließlich wird die dritte der Erfindung zugrunde liegende Aufgabe mit Formteilen nach den Ansprüchen 25 bis 29 gelöst.

Vorteile am Verfahren gemäß der Erfindung sind nun darin zu sehen, daß der Gegenstand bis zur Verleihung des Formgedächtnisses in einem Verfahrenszug hergestellt werden kann, wobei es jedoch ebenso einfach ist, den Herstellungsvorgang in mehrere einzelne Verfahrensschritte zu zerlegen. So kann beispielsweise das Formteil zunächst als Vorformling in einer Grundform gegossen oder gespritzt werden und nach entsprechender Abkühlung auf eine Fixiertemperatur sofort durch Umsetzen in der gleichen Vorrichtung zwangsweise in die schrumpfbare Form unter Druck verformt werden. Hierbei erfolgen zwangsweise Molekülorientierungen, die das Formgedächtnis begründen. Nach einer jeweils festzulegenden Fixierzeit wird das fertige, schrumpfbare Formteil ausgeworfen und kann als Schrumpfelement durch entsprechende Energiezufuhr in seine Ursprungsform zumindest annähernd zurückverformt bzw. geschrumpft werden. Das SPR-Verfahren zeichnet sich also im Gegensatz zum konventionellen Spritzgießen durch eine zweite, zusätzliche Öffnungs- und Schließbewegung der Schließeinheit in der Spritzgieß-Maschine aus. Dabei wird also im ersten Verfahrensschritt ein Vorformling konventionell gespritzt und gerichtet, das heißt unterhalb des Kristallitschmelzpunktes abgekühlt, so daß er sich in einem relativ formstabilen Zustand befindet. Nach Ablauf der Kühlzeit wird das Werkzeug geöffnet und über eine Schieberkonstruktion in der düsenseitigen Werkzeughälfte findet ein Wechsel des Vorformlings in ein zweites Fromnest statt. In der Spritzgießmaschine sind also zwei Formnester vorhanden, das erste für den Vorformling und das zweite für die Fertigteilform, in dem der Preß-Reck-Vorgang ausgeführt wird. So findet im zweiten Verfahrensschritt der eigentliche Preß-Reck-Vorgang durch erneutes Schließen des Werkzeuges statt. Dabei handelt es sich meist um ein Druckplattenpaar, das die Negativkonturen des Fertigteils aufweist. Meist ist eine Druckplatte als beweglicher Umformstempel ausgebildet, durch den beim geschlossenen Werkzeug der Preßdruck für die Druckumformung aufgebracht wird. Nach entsprechender Fixierzeit wird das entstandene SPR-Formteil abgekühlt und über eine Auswerferkonstruktion ausgeworfen. Damit ist das schrumpfbare Fertigteil hergestellt, das sich bei Bedarf durch Wärmezufuhr in seine Ursprungsform zurückverformt.

Wie oben erwähnt, können die Verfahrensschritte gemäß der Erfindung auch aufgeteilt werden. So ist es beispielsweise möglich, daß zunächst Vorformlinge hergestellt werden, denen dann erst später oder auch in einer entsprechenden zweiten Formvorrichtung das Formgedächtnis auferlegt wird. Hierzu bedarf es dann jedoch vorher einer Aufwärmphase, um die Vorformlinge auf die erforderliche Temperatur zu bringen. Im erwärmten Zustand wird dieser separat hergestellte Vorformling dann in die Umformmaschine eingebracht und dem bereits beschriebenen Umformprozeß unterzogen. So ist also in einem ersten Teilprozeß der Vorformling konventionell gespritzt und gerichtet abgekühlt worden, während in einem späteren zweiten Teilprozeß in einer Presse der eigentliche Reckvorgang, das Umformen des Vorformlings in das Fertigteil, stattfindet. Bei diesem Verfahren ist es auch möglich, Vorformlinge zu verwenden, die zum Beispiel aus extrudierten oder gegossenen Halbzeugen herausgearbeitet wurden. Damit besteht die Möglichkeit, je nach Vorgeschichte des Vorformlings die Fertigteileigenschaften gezielt beeinflussen zu können.

Bei beiden Verfahren ist jedoch gleich, daß die Umformung eines Vorformlings in ein schrumpfbares Fertigteil erfolgt. Während dieser Umformung, das heißt Änderung der Formteilgeometrie bei annähernd konstantem Formteilvolumen, entstehen durch Fließ- und Reckprozesse zumindest in partiellen Bereichen hohe Molekülorientierungen im Fertigteil. Diese hochorientierten Bereiche führen nicht nur zu einer deutlichen Steigerung der mechanischen Festigkeit, sondern auch zu einer ebenso gezielten wie erhöhten Schrumpfung in diesen Bereichen. Dieser entropie-elastische Effekt läßt sich mit dem Rückerinnerungsvermögen ausgerichteter Molekülknäuel erklären, die bei Wiedererwärmung einem ungeordneten, d.h. wahrscheinlicheren Zustand anstreben. Durch die Verfahren gemäß der Erfindung wird es nun möglich, die Formteile hinsichtlich ihres Schrumpfverhaltens so zu optimieren, daß ein Schrumpfelement mit vorher festgelegtem Schrumpfverhalten hergestellt werden kann.

Weitere Vorteile sind auch darin zu sehen, daß im Prinzip zur Herstellung des Formgedächtnisses nicht die bisher übliche Vernetzung des Kunststoffteiles und die anschließende Dehnung nötig sind. Diese Vernetzungsverfahren erfordern recht aufwendige Anlagen, insbesondere bei den Vernetzungsverfahren mit energiereicher Elektronen bestrahlung. Die Verfahren mit chemischer Vernetzung können im allgemeinen nur bei Gegenständen mit relativ gleichmäßiger Vernetzung über größere Bereiche hinweg angewendet werden, da mit der chemischen Vernetzung keine scharfe Abgrenzung und damit gezielte Vernetzungsbereiche geschaffen werden können.

Durch das Verfahren gemäß der Erfindung können jedoch durch die bei der Umformung zwangsweise eingebrachten und fixierten Molekülorientierungen in jeder Hinsicht Vorteile gesehen werden; denn die erforderlichen Vorrichtungen und die Verfahrensschritte sind gegenüber bisher relativ einfach und die Verformungsbereiche können scharf und gezielt begrenzt werden. Zusätzlich ergeben sich bei der Herstellung der Kunststoffteile gemäß der Erfindung auch besondere Vorteile bezüglich der Materialeigenschaften, insbesondere bezüglich der Härte, der Belastbarkeit durch äußerlich einwirkende Kräfte und der Schrumpfkraft.

Obwohl im Prinzip gemäß der Erfindung keine Vernetzungsprozesse nötig sind, können die nach dem SPR-Verfahren gefertigten Formteile für besondere Zwecke in bestimmten Bereichen oder auch insgesamt zusätzlich einer Vernetzung, insbesondere chemischer Vernetzung, unterzogen werden. Auf diese Weise können kombinierte Produkte geschaffen werden, mit denen spezielle Aufgaben erfüllt werden können. So ist unter Umständen zweckmäßig, bei schrumpfbaren, längsgeteilten Umhüllungen den Umhüllungsbereich zu vernetzen, während die Längsverschlußbereiche nach dem neuen Verfahren behandelt werden. Dies hat den Vorteil, daß Bereiche mit großem Schrumpfvermögen und relativ "weichen" Materialeigenschaften neben Bereichen mit weniger großem Schrumpfvermögen, jedoch mit verbesserten anderen Materialeigenschaften, die zum Beispiel für Verschlußbereiche besser geeignet sind, in einfacher Weise vereinigt werden können.

Die für das Schrumpfverhalten erforderliche Fixierung der eingebrachten Molekülorientierungen erfolgt je nach verwendetem Material und je nach später erforderlichem Temperaturbereich unter Druck bei einer entsprechend zu wählenden Fixiertemperatur, die in jedem Fall jedoch am bzw. unterhalb des Kristallitschmelzpunktes bzw. Erweichungsbereiches des verwendeten thermoplastischen Kunststoffes liegt. Über und bei dieser Fixiertemperatur erfolgt somit das Verstrecken, also in einem formstabilen Zustand des Vorformlings. Das Druckverstrecken erfolgt zwischen einem Druckplattenpaar mit den entsprechenden Profilierungen für das herzustellende Fertigteil, wobei zumindest eine Druckplatte als beweglicher Druckstempel ausgebildet ist. Bei diesem Druckverstrecken beträgt die Flächenbelastung in Abhängigkeit vom thermoplastischen Material zwischen 10 N/cm² bis 10 000 N/cm², vorzugsweise zwischen 500 N/cm² bis 5000 N/cm².

Die erforderliche Fixierzeit (Druckhaltezeit), das heißt die Zeit vom Beginn des eingesetzten Druckes bis zur Druckentlastung beim Verstreckungsvorgang beträgt zwischen 0,5 Sekunden und 5 Minuten, vorzugsweise jedoch zwischen 2 Sekunden und 2 Minuten.

Die Temperatur der Vorformlinge zu Beginn des Druckverstreckens kann dabei zwischen - 30° C und 200° C, vorzugsweise zwischen 50° C bis 110° C liegen, wobei die Temperatur der Druckplatten vor der Verstreckung zwischen - 30° C und 130° C, vorzugsweise zwischen 50° C und 160° C liegen sollte, je nach dem verwendeten Material und der gewählten Temperatur für die zu verstreckenden Vorformlinge. Außerdem kann hier der Temperaturbereich beeinflußt werden, bei dem die spätere Rückverformung erfolgen soll.

Die Verformung während des Umformungsvorganges, das bedeutet die Umformgeschwindigkeit zum Verformen der Vorformlinge und damit zum Einbringen der zwangsweisen Molekülorientierung soll zwischen 0,1 mm /sec und 100 mm/sec, vorzugsweise zwischen 1 mm /sec und 50 mm/sec liegen.

So läßt sich also nach dem Verfahren gemäß der Erfindung mit der entsprechenden Wahl der vorgenannten Bedingungen eine Vielzahl von Varianten erreichen, so daß für den gewünschten Anwendungsfall jeweils optimale Verhältnisse geschaffen werden können. Dies beginnt bereits bei der Auswahl des thermoplastischen Materials für den Vorformling, so daß hier bereits eine Vorwahl für die Höhe und Richtung der Rückstellkräfte getroffen werden kann. Als Materialien kommen hierfür sämtliche amorphen und teilkristalline Kunststoffe in Betracht. Technisch sinnvoll ist der Einsatz von amorphen Kunststoffen wie z.B. Polystyrol, Acrylnitril/Butadien/Styrol-Copolymer, Polycarbonat sowie Polymethylmethacrylat oder von teilkristallinen Kunststoffen, wie z.B. Polyethylen, Polypropylen, Polyoxymethylen, Polyethylenterephthalat sowie Polyamid. Ebenso können Höhe und Richtung der Rückstellkräfte durch die Art und Weise der Vorgeschichte der verwendeten Vorformlinge gezielt beeinflußt werden, das heißt bei welcher Temperatur und nach welchem Verfahren diese Vorformlinge hergestellt werden. Weiter kann dann Höhe und Richtung der Rückstellkräfte durch die Wahl der Druckverstreckungsparameter und Druckverstreckungsbedingungen gezielt beeinflußt werden, wie oben näher angegeben ist. So können zum Beispiel auch Höhe und Richtung der Rückstellkräfte durch die Geometrie und Abmaße des jeweiligen Vorformlings beeinflußt werden, wobei zum Bei spiel auch nur die Teilbereiche des Vorformlings verstreckt werden, die später bei der Erwärmung durch Schrumpfung ihre Form ändern sollen. Weiterhin lassen sich Höhe und Richtung der Rückstellkräfte durch die Modifikation der Grundbausteine eines Makromoleküls, das heißt des molekularen Aufbaus und dem daraus folgenden Zusammenwirken im Verbund der Molekülketten, beeinflussen. Eine derartige Beeinflussung läßt sich zum Beispiel durch den entsprechenden Aufbau von Copolymeren, durch Einmischungen von Zusatzstoffen, wie Weichmacher, Farbstoffe, Ruß usw. erreichen. So können auch unvernetzte amorphe wie teilkristalline Kunststoffe Netzwerkstrukturen besitzen, die durch Verhakungen oder Verschlaufungen von Molekülketten gebildet werden. Wenn nun derartige "physikalische Netzwerke" gedehnt werden, lösen sich diese Strukturen teilweise und bilden sich wieder neu. Daraus ergeben sich dann höhere Rückstellkräfte des gedehnten Netzwerkes. So können dann durch gezieltes Einmischen oder Einbringen von geeigneten Substanzen mit zum Beispiel polarem Bindungscharakter, großen Seitengruppen usw. die Rückstellkräfte ebenfalls gezielt beeinflußt werden.

Die zum Schrumpfen erforderliche Aktivierung der Rückstellkräfte erfolgt dann schließlich durch Zuführung entsprechender Energie, zum Beispiel durch Erwärmung mit offener Flamme, Heißluft, Infrarotstrahlen, Wärmekontakt oder ähnlichem. Die zum Aktivieren der Rückstellkräfte erforderlichen Temperaturen liegen im Bereich zwischen 50° C und 250° C, vorzugsweise zwischen 120° C und 180° C und liegen auf jeden Fall unterhalb des Schmelzpunktes des verwendeten Kunststoffmaterials.

Die bei der Rückstellung wirksamen Rückstellkräfte entstehen nun durch Aufhebung der eingebrachten Molekülorientierung, durch Aufhebung einer vorangegangenen Dehnung und Verstreckung von kristallinen Bereichen (Fibrillen) bzw. durch Bildung oder Anwachsen von kristallinen Sphärolithstrukturen oder amorphen Phasen. Dabei werden diese Rückstellkräfte in den vorhergehenden Vorgängen nach dem SPR-Verfahren gezielt so eingestellt, daß jeweils die gewünschte Rückbildung bzw. Schrumpfung am Formteil eintritt.

Schrumpfrohre können nun nach dem Verfahren gemäß der Erfindung aus zunächst normal extrudierten Kunststoffschläuchen hergestellt werden, wenn sie mit Hilfe einer konischen Reckform aufgeweitet werden, wobei das Aufweiten unter den vorher bereits beschriebenen Bedingungen erfolgt. Weiterhin können zum Beispiel extrudierte Flächenfolien mit aufgebrachten oder mitextrudierten Stegen zu Kabelummantelungen verstreckt werden, wobei in diese Formteile eventuell auch Formschluß- oder Kraftschlußverbindungen mit einextrudiert werden, so daß multifunktionale Elemente entstehen. Auf diese Weise lassen sich auch Spritzgußvorformlinge für Kabel und für Verschlüsse an Kabelgarnituren oder ähnlichen herstellen, wobei jeweils neben dem Schrumpfverhalten die gegenüber dem bisher bekannten Stand der Technik verbesserten Materialeigenschaften zur Geltung gebracht werden können, wie verbesserte Härte, höhere Schrumpfkräfte, verbessertes Temperaturverhalten und ähnliches.

Die Erfindung wird nun anhand von dreizehn Figuren näher erläutert.

Figur 1 und 2 verdeutlichen das Spritzgieß-Preß-Reck- bzw. Preß-Reck-Verfahren (SPR) für die Herstellung eines Schrumpfteiles.

Figur 3 zeigt einen Anwendungsfall für ein nach der Erfindung hergestelltes Verschlußteil.

Figur 4, 5, 6 bzw. 7 zeigt jeweils eine Möglichkeit für die Ausbildung eines Verschlußteils nach Figur 3.

Figur 8, 9 bzw. 10 zeigt jeweils ein rastbares Verschluß-bzw. Verbindungselement, bei dem die Rastteile ihre Form bei Wärmezufuhr gezielt verändern.

Figur 11 skizziert die Herstellung eines schrumpfbaren Kunststoffschlauches nach dem erfindungsgemäßen Verfahren.

Figur 12 zeigt die Möglichkeit zur Herstellung von Folien mit zusätzlichen, verformbaren Elementen.

Figur 13 skizziert die Herstellung von schrumpfbaren Kappen nach dem Verfahren gemäß der Erfindung.

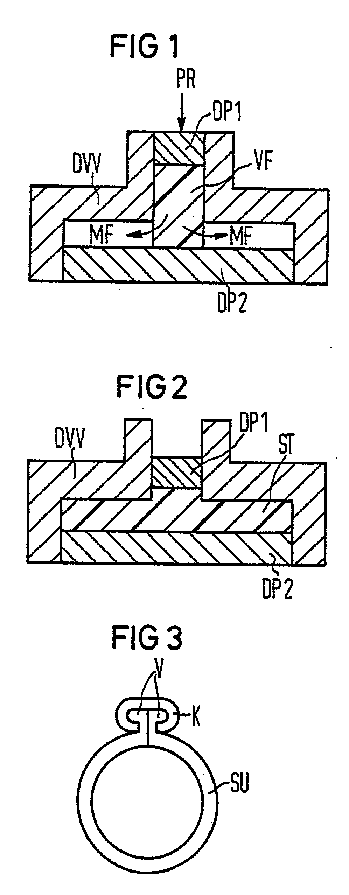

In den beiden Figuren 1 und 2 wird das Prinzip des Druckverstreckens - wobei das Herstellen eines Vorformlings VF durch Gießen, Spritzgießen oder Extrudieren vorausgesetzt ist - skizziert, nach dem erfindungsgemäß schrumpfbare Kunststofffertigteile ST hergestellt werden. Diese Fertigteile FT können durch Zufuhr von Wärme wieder in ihre Ursprungsform zurückgebildet werden. Dieses Verhalten wird als Schrumpfen bezeichnet und wird gemäß der Erfindung für die verschiedensten Anwendungsfälle herangezogen. Bei dieser Rückbildung werden dann die dem Formteil FT unterstellten Aufgaben erfüllt, zum Beispiel Umfassen eines Gegenstandes, Abdichtung einer Öffnung, Verbindung einzelner Gegenstände und ähnliches. Die Figur 1 zeigt im Prinzip eine Druckverstreckungsvorrichtung DVV, die zum Beispiel auch Teil einer Extruxionsvorrichtung sein kann, aus der dann der entsprechende Vorformling VF übernommen werden kann. Hier sind zwei Druckplatten DP1 und DP2 angedeutet, zwischen denen die Verstreckung, das heißt die Umformung unter Druck bei entsprechender Temperatur des im "festen" Zustand befindlichen Vorformlings VF erfolgt. Diese Druckplatten DP1 und DP2 enthalten alle Ausformungen, die das schrumpfbare Teil ST als Profile aufweisen muß. Die Druckverstreckungsvorrichtung DVV ist für den Verstreckungsvorgang auf die bereits oben angegebenen Temperaturverhältnisse gebracht, die auch während der anschließenden Fixierzeit beibehalten werden. Nach Einbringen des warmen Vorformlings VF wird nach den genannten Angaben die als Druckkolben ausgebildete Druckplatte DP1 betätigt, während die zweite Druckplatte DP2 als Gegenplatte wirkt. Bei der Bewegung PR der ersten Druckplatte DP1 wird nun der Vorformling VF verformt, wobei das Material aufgrund des Verformungsdruckes in der angegebenen Materialflußrichtung MF in die Form des zweiten durch die Druckplatten DP1, DP2 und die weiteren Wandungen der Druckverstreckungsvorrichtung DVV gebildeten Formnestes gepreßt wird. Dabei entstehen zwangsweise die für das Schrumpfverhalten nötigen Molekülorientierungen. Nachdem dieses zweite Formnest vom umgeformten Vorformling VF ausgefüllt ist, werden unter Beibehaltung eines Fixierdruckes, der unterhalb des Umformdruckes liegen kann, die Molekülorientierungen über eine gewisse, oben näher angegebene Fixierzeit hinweg fixiert. Danach kann der Fixierdruck abgenommen werden und das fertige, nun schrumpfbare Fertigteil ST, wie es in Figur 2 skizziert ist, wird aus dem Formnest ausgeworfen. Diese Gestalt ist dann so lange stabil, bis das schrumpfbare Teil ST wieder auf Fixiertemperatur oder darüber hinaus erwärmt wird. Dies erfolgt dann bei dem gezielt eingeleiteten Schrumpfvorgang durch Zuführung von Energie, insbesondere von Wärmeenergie. Das in Figur 2 umgeformte schrumpfbare Teil ST ist dabei bestrebt in seine in Figur 1 angedeutete Ursprungsform des Vorformlings VF zurückzukehren, wobei die bei seiner Umformung ihm zugedachte Aufgabe erfüllt wird.

Die Figur 3 zeigt einen Anwendungsfall für ein nach dem Verfahren der Erfindung hergestelltes schrumpfbares Teil in Form einer Klammer K, mit der zum Beispiel eine schrumpfbare Umhüllung SU entlang ihres längsseitigen Verschlußbereiches V zusammengehalten wird. Die schrumpfbare Umhüllung SU könnte zum Beispiel aus thermoplastischem Material bestehen, dem bei einem Vernetzungsprozeß und anschließendem Dehnungsverfahren ein Schrumpfverhalten verliehen worden ist. Doch könnte es sich hierbei auch um jedes beliebige Umhüllungsteil handeln. Entlang des längsseitigen Verschlußbereiches V sind nun Wülste angebracht, die von einer Klammer K, die nach dem Verfahren der Erfindung hergestellt ist, zusammengehalten werden. Diese Klammer K ist so ausgebildet, daß sie als schrumpfbares Teil zunächst leichtgängig über die Wülste aufgezogen werden kann, so daß eine lose Vorfixierung gegeben ist. Anschließend werden die zwangsweise durch das erfindungsgemäße Verfahren eingebrachten Molekülorientierungen aufgehoben; die Klammer K schrumpft und umfaßt die beiden Wülste im Verschlußbereich V klemmend, da die Klammer ihrem ursprünglichen Ausgangszustand zustrebt, der in diesem Fall eine Verengung seiner nutförmigen Öffnung zur Folge hat.

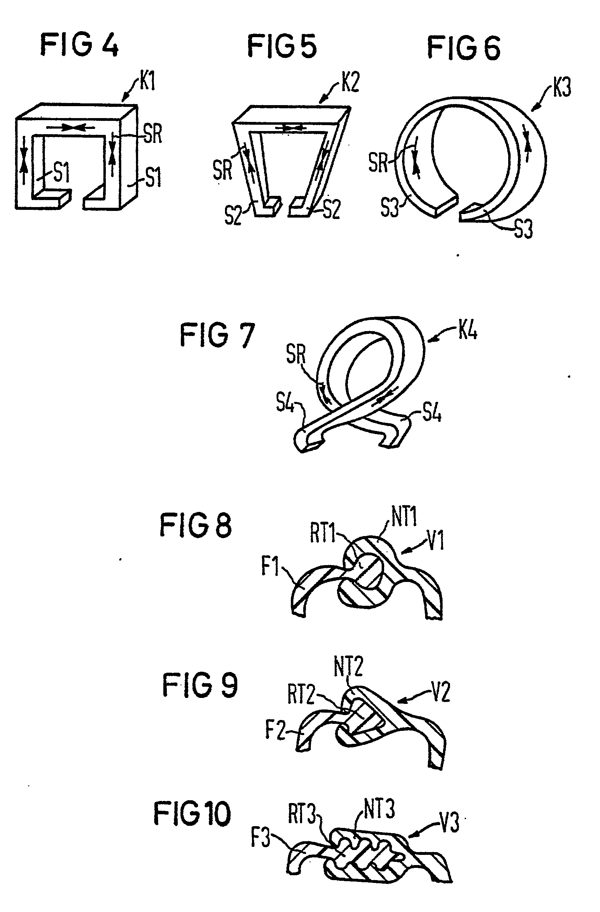

Die Figuren 4, 5 und 6 zeigen einfache Ausführungen von Klammern K1, K2 bzw. K3, die für Anwendungsfälle gemäß der Figur 3 geeignet sind. Figur 4 zeigt eine Klammer K1 für rechteckige, Figur 5 eine Klammer K2 für keilförmige und Figur 5 eine Klammer K3 für kreisförmige Verschlußelemente V entlang der Umhüllung SU. Die entsprechenden Schenkel S1, S2 bzw. S3 dieser Klammern K1, K2 bzw. K3 sind nach dem Verfahren gemäß der Erfindung durch Druckverstrecken verformt und bilden sich bei Erwärmung entsprechend der dort angegebenen Doppelpfeile SR zurück. Dabei ergeben sich Verengungen und Schrumpfungen in der Teilegeometrie, die zur engen Umfassung der zusammenzuhaltenden Verschlußelemente führen. Dies wird noch dadurch unterstützt, daß die Schenkel durch das Schrumpfen verdickt werden. Auf diese Weise wird die Umfassung noch enger.

Die Figur 7 zeigt eine besondere Form einer Klammer K4, die aufgrund der Übergreifung der beiden Schenkel S4 besondere Federungseigenschaften aufweist. Außerdem wird hier auf diese Weise der Verformungsweg verlängert. Dies sei nur ein Hinweis auf die Möglichkeit zur vielfältigen Gestaltung und Anpassung in besonderen Anwendungsfällen, die ein Schrumpfverhalten nach dem Verfahren gemäß der Erfindung aufweisen.

Die Figuren 8, 9 und 10 zeigen Verbindungs- oder Verschlußeinheiten V1, V2 bzw. V3, die ebenfalls nach dem Verfahren gemäß der Erfindung hergestellt werden können. Hier sind die einen Enden von Bändern oder flächenhaften Folien F1, F2 oder F3 in Form von Nuten NT1, NT2 oder NT3 ausgebildet, in welche die zweiten Enden der Bänder oder Folien F1, F2 oder F3 bereits leicht rastend eingeführt werden können. Die Nuten und die zweiten Enden sind durch das zwangsweise eingebrachte Formgedächtnis so aufeinander abgestimmt, daß bei einer Erwärmung, die den obengenannten Bestimmungen entspricht, die eingeprägte Rückverformung erfolgt, die hier in gewünschter Weise zu einer engen gegenseitigen Verklammerung der Verschlußelemente führt, wie diese Figuren zeigen. Je nach gewählter Form dieser Elemente können die erforderlichen Bedingungen nach Dichtigkeit, Festigkeit und ähnlichem erfüllt werden. Hierfür stehen die in den Figuren 8, 9 und 10 dargestellten Ausführungsformen als Beispiel. Selbstverständlich lassen sich zwischen solchen Elementen noch zusätzliche Dichtungsmittel, Klebemittel oder ähnliches einbringen, so daß weitere Forderungen diesbezüglich erfüllt werden können.

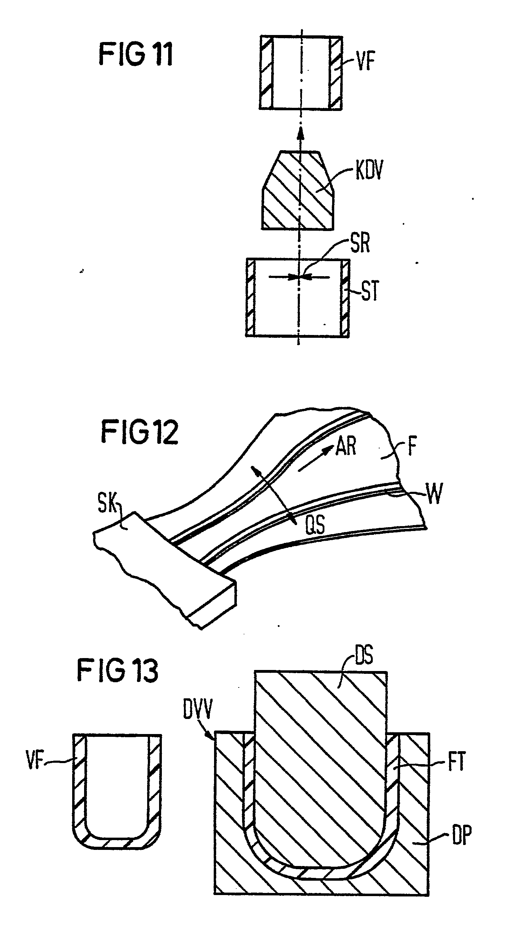

Die Figur 11 deutet zum Beispiel ein Verfahren gemäß der Erfindung an, nach dem aus einem schlauchförmigen Vorformling VF durch Druckverstrecken mit Hilfe einer skizzenhaft angedeuteten konischen Druckverstreckungsvorrichtung KDV ein schrumpfbares Schlauchstückteil ST hergestellt werden kann, das dann bei Einwirkung von Wärme nach den obengenannten Bedingungen wieder zurückverformt wird. Dabei wird dieses Schlauchstück ST auf einem eingeführten Gegenstand festsitzend aufgeschrumpft werden. Die radiale Schrumpfrichtung dieses Schlauchstükkes ST ist in der Figur 11 mit dem Doppelpfeil SR gekennzeichnet.

Die Figur 12 verdeutlicht, daß das Verfahren gemäß der Erfindung auch bei kombinierten Verfahrensweisen anzuwenden ist. So kann zum Beispiel die aus einer Breitschlitzdüse SK extrudierte Folie F durch biaxiales Recken in QS- und AR-Richtung mit Hilfe einer entsprechenden Abzugsvorrichtung in herkömmlicher Weise oder nach dem Verfahren des Druckverstreckens (SPR) als Schrumpfteil hergestellt werden. Zusätzlich extrudierte Stege oder Wülste W in "Vollmaterial" können dann auch später durch das Preßreck-Verfahren durch zwangsweises Einbringen von Molekülorientierungen mit einem Formgedächtnis versehen werden. Auf diese Weise lassen sich formschlüssige oder auch kraftschlüssige Verbindungselemente herstellen, mit denen die Folie F als Verschluß- bzw. fixierbares Umhüllungselement verwendet werden kann.

Ein weiteres Anwendungsbeispiel für ein Formteil FT, das nach dem erfindungsgemäßen Verfahren hergestellt und verwendet werden kann, ist in Figur 13 angegeben. Hier handelt es sich um ein schrumpfbares kappenförmiges Abschlußelement FT, das durch Druckverstreckung in einer Druckverstreckungsvorrichtung DVV aus einem Vorformling VF hergestellt wird. Dieses schrumpfbare Teil FT wird mit Hilfe eines Druckstempels DS und einer weiteren Druckplatte DP, die die äußere Form bestimmt, nach den obengenannten Bedingungen hergestellt. Dieser Weitungsprozeß ist in äußerst vereinfachter Form dargestellt und soll nur andeuten, daß durch geeignete Weitungsmittel unter Druck und bei der für das Material entsprechenden Temperatur druckverstreckt werden kann. Die dabei zwangsweise eingebrachten Molekülorientierungen bewirken dann bei Wiedererwärmung die Rückstellkräfte im schrumpfbaren Teil FT, so daß diese Kappe als Rohrverschluß oder ähnliches auf ein zu verschließendes Element aufgeschrumpft werden kann.

Diese Ausführungsbeispiele zeigen im wesentlichen das Prinzip der Erfindung auf, das heißt, daß nach den Verfahren des Druckverstreckens bei entsprechender Wahl der hierzu nötigen Randbedingungen ein Schrumpfgedächtnis eingeprägt werden kann, dessen fixierte Rückstellkräfte durch Erwärmen aktivierbar sind, so daß bei dieser Energiezufuhr eine gezielte Formänderung in Gang gesetzt werden kann; und dies ohne aufwendige oder relativ schwer zu steuernde Vernetzungsprozesse.

## Patentansprüche

1. Verfahren zur Herstellung eines Kunststoffteils, dem durch Verformen im festen Aggregatszustand ein Formgedächtnis eingeprägt wird, dadurch gekennzeichnet,
daß zunächst ein Vorformling aus thermoplastischem Kunststoff durch Spritzgießen, Extrudieren, Pressen oder Gießen hergestellt wird, daß dieser Vorformling auf eine Temperatur, die unterhalb des Kristallitschmelzpunktes und des Erweichungspunktes des verwendeten thermoplastischen Erweichungspunktes liegt, erwärmt wird, daß dann der erwärmte Vorformling durch ein Druckverstreckungsverfahren unter Druckeinwirkung zur Erlangung von Molekülorientierungen über eine dem verwendeten thermoplastischen Kunststoff entsprechende Fixierzeit hinweg zum Kunststoffteil mit Formgedächtnis verformt und fixiert und schließlich abgekühlt wird und daß dieses verformte Kunststoffteil bei erneuter Erwärmung auf die bei der Druckverstreckung eingestellte Temperatur in die Form des Vorformlings zurückgestellt wird.

2. Verfahren nach Anspruch 1, dadurch gekennzeichnet, daß das als Vorformling (VF) hergestellte Kunststoffteil in der gleichen Vorrichtung sofort anschließend in der angeschlossenen Druckverstreckungsvorrichtung (DVV) druckverstreckt wird.

3. Verfahren nach Anspruch 1, dadurch gekennzeichnet, daß das als fertiges Halbzeug hergestellte Kunststoffteil nach Erwärmung auf die zum Verstrecken erforderliche Temperatur in die Druckverstreckungsvorrichtung (DVV) eingebracht und dann druckverstreckt wird.

4. Verfahren nach einem der vorhergehenden Ansprüche, dadurch gekennzeichnet, daß in den Kunststoffteilen zusätzlich zum Druckverstrecken eine chemische Vernetzung durchgeführt wird.

5. Verfahren nach einem der vorhergehenden Ansprüche, dadurch gekennzeichnet,
daß die Höhe und Richtung der Rückstellkräfte in den Kunststoffteilen (FT) durch die Wahl der Druckverstreckungsparameter und Druckverstreckungsbedingungen gezielt beeinflußt werden, insbesondere daß

a. die Druckverstreckung in Abhängigkeit vom verwendeten thermoplastischen Material bei einer Flächenlast von 10 N/cm$^2$ bis 10.000 N/cm$^2$, vorzugsweise 500 N/cm$^2$ bis 5.000 N/cm$^2$ ausgeübt wird,

b. die für das Fixieren der Molekülorientierungen benötigte Fixierzeit (Druckhaltezeit) zwischen 0,5 sec und 5 min, bevorzugt zwischen 2 sec und 2 min liegt,

c. die Druckverstreckung bei einer mittleren Temperatur der Vorformlinge von −30°C bis 200°C, bevorzugt von 50°C bis 110°C erfolgt.

6. Verfahren nach einem der vorhergehenden Ansprüche, dadurch gekennzeichnet,
daß die Höhe und Art der Rückstellkräfte in den Kunststoffteilen (FT) durch die Wahl des thermoplastischen Kunststoffes gezielt beeinflußt werden.

7. Verfahren nach einem der vorhergehenden Ansprüche, dadurch gekennzeichnet,
daß nur Teilbereiche der Vorformlinge (VF) gezielt verstreckt werden.

8. Verfahren nach einem der vorhergehenden Ansprüche, dadurch gekennzeichnet,
daß die Aktivierung der Rückstellkräfte zur Aufhebung der eingebrachten Molekülorientierungen durch Zuführung von Wärmeenergie erfolgt.

9. Verfahren nach einem der Ansprüche 1 bis 7, dadurch gekennzeichnet,
daß die Aktivierung der Rückstellkräfte durch Aufhebung der Dehnung und Verzerrung von kristallinen Bereichen (Fibrillen und Sphärolithen) erfolgt.

10. Verfahren nach einem der Ansprüche 1 bis 7, dadurch gekennzeichnet,
daß die Rückstellkräfte durch Bildung oder Anwachsen von kristallinen oder amorphen Phasen aktiviert werden.

11. Verfahren nach einem der vorhergehenden Ansprüche, dadurch gekennzeichnet,
daß die Druckvorrichtung für das Druckverstrecken, insbesondere die benötigten Druckplatten (DP) während des Druckverstreckens und Fixierens auf einer Temperatur von –30°C bis 130°C, bevorzugt von 50°C bis 160°C gehalten werden.

12. Verfahren nach einem der vorhergehenden Ansprüche, dadurch gekennzeichnet,
daß die Umformgeschwindigkeit zum Einbringen der Molekülorientierungen zwischen 0,1 mm/sec und 100 mm/sec, bevorzugt zwischen 1 mm/sec und 50 mm/sec beträgt.

13. Verfahren nach einem der vorhergehenden Ansprüche, dadurch gekennzeichnet,
daß zur Aktivierung der Rückstellkräfte die schrumpfbaren Kunststoffteile (FT) auf eine Temperatur von 50°C bis 250°C, bevorzugt von 120°C bis 180°C gebracht werden.

14. Vorrichtung zur Durchführung des Verfahrens nach einem der vorhergehenden Ansprüche, dadurch gekennzeichnet,
daß sie eine Spritzguß-, Extrudier-, Preß- oder Gießeinrichtung aufweist mit einem ersten Formnest zur Herstellung eines Vorformlings (VF), daß weiterhin in dieser Vorrichtung eine Verschiebeeinrichtung zum Versetzen des Vorformlings (VF) in ein zweites Formnest angeordnet ist, wobei dieses zweite Formnest aus mindestens zwei Druckplatten (DP) besteht, die die zum gezielten Umverformen des schrumpfbaren Teils (FT) benötigten Konturen und Ausformungen aufweisen, daß weiterhin eine Druckvorrichtung zum Druckverstrecken des Vorformlings (VF) in diesem zweiten Formnest angeordnet ist und daß die Vorrichtung Temperatur- und Druckregelungen und Heizungsvorrichtungen aufweist.

15. Vorrichtung zur Durchführung des Verfahrens nach einem der Ansprüche 1 bis 13, dadurch gekennzeichnet,
daß sie aus einem einzigen Formnest besteht, in dem die Druckverstreckung eines separat hergestellten und vortemperierten Vorformlings (VF) erfolgt.

16. Schrumpfbares rohrförmiges Formteil, hergestellt nach den in den Ansprüchen 1 bis 13 gekennzeichneten Verfahren und in einer Vorrichtung nach einem der Ansprüche 14 oder 15, dadurch gekennzeichnet,
daß es durch Druckverstrecken radial aufgeweitet ist.

17. Schrumpfbares Formteil, hergestellt nach den in den Ansprüchen 1 bis 13 gekennzeichneten Verfahren und in einer Vorrichtung nach einem der Ansprüche 14 oder 15, dadurch gekennzeichnet,
daß es als Klammer (K1, K2, K3) für Formschluß- oder Kraftschlußverbindungen, vorzugsweise in U-, V- oder Kreisform ausgebildet ist.

18. Schrumpfbares Formteil, hergestellt nach den in den Ansprüchen 1 bis 13 gekennzeichneten Verfahren und in einer Vorrichtung nach einem der Ansprüche 14 oder 15, dadurch gekennzeichnet,
daß es als Klammer (K4) mit übergreifenden Schenkeln (S4) ausgebildet ist.

19. Schrumpfbares Formteil, hergestellt nach dem in den Ansprüchen 1 bis 13 gekennzeichneten Verfahren und in einer Vorrichtung nach einem der Ansprüche 14 oder 15, dadurch gekennzeichnet,
daß es als Verschlußelement entlang von Umhüllungen (SU) angeordnet ist.

20. Flächenfolien aus Kunststoff, dadurch gekennzeichnet,
daß in ihr Stege oder Wülste angeordnet sind, die nach dem in den Ansprüchen 1 bis 13 gekennzeichneten Verfahren ein Formgedächtnis aufweisen.

**Claims**

1. Method of producing a plastic part, to which a shape memory is imparted by deforming in the solid state of aggregation, characterized in that firstly a preform is produced from thermoplastic material by injectionmoulding, extrusion, compression moulding or casting, in that this preform is heated to a temperature which is below the crystalline melting point and the softening point of the thermoplastic material used, in that then the heated preform is deformed into the plastic part with shape memory and fixed over a fixing time corresponding to the them, oplastic material used by a pressure stretching process with the application of pressure to obtain molecular orientations and finally cooled, and in that this deformed plastic part is restored to the shape of the preform upon renewed heating to the temperature set in pressure stretching.

2. Method according to Claim 1, characterized in that the plastic part produced as the preform (VF) is pressure-stretched in the same apparatus immediately thereafter in the adjoining pressure stretching apparatus (DVV).

3. Method according to Claim 1, characterized in that the plastic part produced as the completed semifinished product is introduced into the pressure stretching apparatus (DVV), after heating to the temperature required for stretching, and is then pressure-stretched.

4. Method according to one of the preceding claims, characterized in that a chemical crosslinking is carried out in the plastic parts in addition to the pressure stretching.

5. Method according to one of the preceding claims, characterized in that the degree and direction of the restoring forces in the plastic parts (FT) are specifically influenced by the choice of the pressure stretching parameters and pressure stretching conditions, in particular in that

a. the pressure stretching is executed as a function of the thermoplastic material used at a surface load of from 10 N/cm² to 10,000 N/cm², preferably 500 N/cm² to 5,000 N/cm²,

b. the fixing time (pressure-holding time) required for fixing the molecular orientations lies between 0.5 sec and 5 min, preferably between 2 sec and 2 min,

c. the pressure stretching is performed at an average temperature of the preformes of from -30°C to 200°C, preferably of from 50°C to 110°C.

6. Method according to one of the preceding claims, characterized in that the degree and the of the restoring forces in the plastic parts (FT) are specifically influenced by the choice of thermoplastic material.

7. Method according to one of the preceding claims, characterized in that only sub-regions of the preforms (VF) are specifically stretched.

8. Method according to one of the preceding claims, characterized in that the activation of the restoring forces for cancelling the molecular orientations introduced is performed by supplying thermal energy.

9. Method according to one of Claims 1 to 7, characterized in that the activation of the restoring forces is performed by cancelling the extension and distortion of crystalline regions (fibrils and spherulites).

10. Method according to one of Claims 1 to 7, characterized in that the restoring forces are activated by formation or growth of crystalline or amorphous phases.

11. Method according to one of the preceding claims, characterized in that the pressure apparatus for the pressure stretching, in particular the required pressure plates (DP), are kept at a temperature of from -30°C to 130°C, preferably of from 50°C to 160°C, during the pressure stretching and fixing.

12. Method according to one of the preceding claims, characterized in that the reshaping rate for introducing the molecular orientations is between 0.1 mm/sec and 100 mm/sec, preferably between 1 mm/sec and 50 mm/sec.

13. Method according to one of the preceding claims, characterized in that, for activation of the restoring forces, the shrinkable plastic parts (FT) are brought to a temperature of from 30°C to 250°C, preferably of from 120°C to 180°C.

14. Apparatus for carrying out the method according to one of the preceding claims, characterized in that it has an injection-moulding, extrusion, compressionmoulding or casting means having a first shaping recess for producing a preform (VF), in that there is also arranged in this apparatus a shifting means for transferring the preform (VF) into a second shaping recess, this second shaping recess consisting of at least two pressure plates (DP), which have the contours and shaped portions required for the specific reshaping of the shrinkable part (FT), in that there is also arranged a preasure apparatus for pressure stretching the preform (VF) in this second shaping recess, and in that the apparatus has temperature and pressure controls and heating devices.

15. Apparatus for carrying out the method according to one of Claims 1 to 13, characterized in that it consists of a single shaping recess, in which the pressure stretching of a separately produced and preheated preform (VF) is performed.

16. Shrinkable tubular moulded part, produced by the method characterized in Claims 1 to 13 and in an apparatus according to one of Claims 14 or 15, characterized in that it is radially widened by pressure stretching.

17. Shrinkable moulded part, produced by the method characterized in Claims 1 to 13 and in an apparatus according to one of Claims 14 or 15, characterized in that it is designed as a clamp (K1, K2, K3) for positive or non-positive connections, preferably in the shape of U, V or circle.

18. Shrinkable moulded part, produced by the method characterized in Claims 1 to 13 and in an apparatus according to one of Claims 14 or 15, characterized in that it is designed as a clamp (K4) with overlapping legs (S4).

19. Shrinkable moulded part, produced by the method characterized in Claims 1 to 13 and in an apparatus according to one of Claims 14 or 15, characterized in that it is arranged as a closure element along envelopes (SU).

20. Sheet-like films of plastic, characterized in that there are arranged in them webs or beads which have a shape memory according to the method characterized in Claims 1 to 13.

## Revendications

1. Procédé de fabrication d'une pièce en matière plastique à laquelle on imprime une mémoire de forme par déformation à l'état solide, caractérisé, en ce qu'il consiste à fabriquer d'abord une ébauche en matière plastique thermoplastique par moulage par injection, par extrusion, par moulage par compression ou par coulée, à chauffer cette ébauche à une température qui est inférieure au point de fusion des cristallites et au point de ramollissement de la matière thermoplastique utilisée, à déformer et à fixer l'ébauche chauffée par un procédé d'étirage sous pression, sous l'action de la pression, pour obtenir des orientations de molécules, pendant une durée de fixation qui dépend de la matière plastique thermoplastique utilisée, en une pièce en matière plastique ayant une mémoire de forme, et enfin à la refroidir, et à remettre cette pièce en matière plastique déformée sous la forme de l'ébauche en la réchauffant à la température utilisée pour l'étirage sous pression.

2. Procédé suivant la revendication 1, caractérisé, en ce qu'il consiste à étirer sous pression la pièce en matière plastique, fabriquée sous la forme d'une ébauche (VF) dans le même dispositif, immédiatement ensuite dans le dispositif d'étirage sous pression (DVV) qui y est raccordé.

3. Procédé suivant la revendication 1, caractérisé, en ce qu'il consiste à introduire la pièce en matière plastique, fabriquée sous la forme d'un demi-produit fini, après l'avoir portée à la température nécessaire à l'étirage, dans le dispositif d'étirage sous pression (DVV), puis à l'étirer sous pression.

4. Procédé suivant l'une des revendications précédentes, caractérisé, en ce qu'il consiste à effectuer, dans les pièces en matière plastique, une réticulation chimique en plus de l'étirage sous pression.

5. Procédé suivant l'une des revendications précédentes, caractérisé,

en ce qu'il consiste à influencer, de manière appropriée, l'intensité et la direction des forces de retour à l'état initial dans les pièces en matière plastique (FT) par le choix des paramètres de l'étirage sous pression et des conditions de l'étirage sous pression, notamment pour que

a. l'étirage sous pression soit effectué en fonction du matériau thermoplastique utilisé à une charge superficielle de 10 N/cm² à 10.000 N/cm² et, de préférence, de 500 N/cm² à 5.000 N/cm²,

b. la durée de fixage (durée de maintien sous pression) nécessaire pour le fixage des orientations des molécules soit comprise entre 0,5 seconde et 5 minutes, de préférence entre 2 secondes et 2 minutes,

c. l'étirage sous pression s'effectue à une température moyenne des ébauches de −30°C à 200°C et, de préférence, de 50°C à 110°C.

6. Procédé suivant l'une des revendications précédentes, caractérisé,

en ce qu'il consiste à influer de manière appropriée sur l'intensité et la nature des forces de retour à l'état initial dans les pièces en matière plastique (FT) par le choix de la matière plastique thermoplastique.

7. Procédé suivant l'une des revendications précédentes, caractérisé,

en ce qu'il consiste à n'étirer de manière appropriée que des régions partielles des ébauches (VF).

8. Procédé suivant l'une des revendications précédentes, caractérisé,

en ce qu'il consiste à effectuer l'activation des forces de retour à l'état initial pour mettre fin aux orientations moléculaires introduites par apport d'énergie calorifique.

9. Procédé suivant l'une des revendications 1 à 7, caractérisé,

en ce qu'il consiste à effectuer l'activation des forces de retour à l'état initial en faisant cesser la dilatation et la déformation des parties cristallines (fibrilles et sphérolithes).

10. Procédé suivant l'une des revendications 1 à 7, caractérisé,

en ce qu'il consiste à activer les forces de retour à l'état initial par formation ou par croissance de phases cristallines ou amorphes.

11. Procédé suivant l'une des revendications précédentes, caractérisé,

en ce qu'il consiste à maintenir le dispositif d'application d'une pression pour l'étirage sous pression, notamment les plaques de pression (DP) qui sont nécessaires pendant l'étirage sous pression et le fixage, à une température de −30°C à 130°C et, de préférence, de 50°C à 160°C.

12. Procédé suivant l'une des revendications précédentes, caractérisé,

en ce que la vitesse de déformation pour initier les orientations moléculaires est comprise entre 0,1 mm/seconde et 100 mm/seconde et, de préférence, entre 1 mm/seconde et 50 mm/seconde.

13. Procédé suivant l'une des revendications précédentes, caractérisé,

en ce qu'il consiste, pour activer les forces de retour à l'état initial, à porter les pièces en matière plastique (FT) rétractables à une température de 50°C à 250°C et, de préférence, de 120°C à 180°C.

14. Dispositif pour la mise en œuvre du procédé suivant l'une des revendications précédentes, caractérisé,

en ce qu'il comprend un dispositif de moulage par injection, par extrusion, par moulage par compression ou par coulée ayant une première cavité de conformation destinée à la fabrication d'une ébauche (VF), en ce qu'il est en outre prévu, dans ce dispositif, un dispositif de déplacement pour déplacer l'ébaucher (VF) et l'amener dans une seconde cavité de conformation, cette seconde cavité de conformation étant constituée d'au moins deux plaques de pression (DP), qui présentent les contours et les conformations nécessaires à la déformation adéquate de la pièce rétractable (FT), en ce qu'il est prévu en outre un dispositif d'application d'une pression pour étirer sous pression l'ébauche (VF) dans cette seconde cavité de conformation et en ce que le dispositif comporte des régulations de température et de pression et des dispositifs de chauffage.

15. Dispositif pour la mise en œuvre du procédé suivant l'une des revendications 1 à 13, caractérisé, en ce qu'il est constitué d'une seule cavité de conformation, dans laquelle s'effectue l'étirage sous pression d'une ébauche (VF) fabriquée de manière distincte et dont la température a été réglée à l'avance.

16. Pièce moulée tubulaire rétractable fabriquée suivant le procédé caractérisé aux revendications 1 à 13, et dans un dispositif suivant l'une des revendications 14 ou 15, caractérisé,

en ce qu'elle est élargie radialement par étirage sous pression.

17. Pièce moulée rétractable fabriquée suivant le procédé caractérisé aux revendications 1 à 13, et dans un dispositif suivant l'une des revendications 14 ou 15, caractérisé,

en ce qu'elle est constituée sous la forme d'une agrafe (K1, K2, K3) de liaison par complémentarité de formes ou par coopération de forces, de préférence en forme de U, de V ou circulaire.

18. Pièce moulée rétractable fabriquée suivant le procédé caractérisé dans l'une des revendications 1 à 13 et dans un dispositif suivant l'une des revendications 14 ou 15, caractérisé,

en ce qu'elle est constituée sous la forme d'une agrafe (K4) à branches (S4) qui se croisent.

19. Pièce moulée rétractable fabriquée suivant le procédé caractérisé dans l'une des revendications 1 à 13 et dans un dispositif suivant l'une des revendications 14 ou 15, caractérisé,

en ce qu'elle est montée comme élément de fermeture le long de gaines (SU).

20. Feuilles planes en matière plastique, caractérisé,

en ce qu'il est prévu des réglettes ou des bourrelets qui présentent une mémoire de forme par le procédé caractérisé aux revendications 1 à 13.

# FIG 1

# FIG 2

# FIG 3

# FIG 4

# FIG 5

# FIG 6

# FIG 7

# FIG 8

# FIG 9

# FIG 10

FIG 11

VF

KDV

SR

ST

FIG 12

AR

F

SK

W

QS

FIG 13

DS

DVV

VF

FT

DP